# EUROPÄISCHE PATENTSCHRIFT

(11) **EP 2 274 529 B1**
(45) Veröffentlichungstag und Bekanntmachung des Hinweises auf die Patenterteilung: **30.01.2013**
(21) Anmeldenummer: 09741845.3
(22) Anmeldetag: 02.05.2009
(51) Int. Cl.: F16D 23/02

(54) **BLECH-SYNCHRONRING**
SYNCHRONIZER RING MADE OF SHEET METAL
BAGUE DE SYNCHRONISATION EN TÔLE

(30) Priorität: 09.05.2008 DE 102008023031
(43) Veröffentlichungstag der Anmeldung: 19.01.2011
(73) Patentinhaber: Diehl Metall Stiftung & Co. KG, 90552 Röthenbach (DE)
(72) Erfinder: DÖRNHÖFER, Martin, 91245 Simmelsdorf (DE); ERDMANN, Knut, 90478 Nürnberg (DE); HOLDERIED, Meinrad, 91338 Igensdorf (DE)
(74) Vertreter: Diehl Patentabteilung
(86) Internationale Anmeldenummer: PCT/EP2009/003162
(87) Internationale Veröffentlichungsnummer: WO 2009/135626

(56) Entgegenhaltungen:
- EP-A- 0 821 175
- WO-A-03/062659
- DE-A1- 3 519 811
- DE-A1- 19 853 856

## Beschreibung

Die Erfindung betrifft einen Blech-Synchronring für eine Synchronisiereinrichtung gemäß dem Oberbegriff des Anspruchs 1.

Blech-Synchronringe werden aus einem ebenen Blechmaterial im Stanz- und Ziehverfahren hergestellt. Dadurch lassen sich keine massiven axialen Anschläge realisieren, wie sie bei geschmiedeten Messing-Synchronringen üblich sind. Um ein Verdrehen eines Synchronrings in Umfangsrichtung gegenüber einer Synchronnabe zu vermeiden, offenbart die DE 35 19 811 A1 einen gattungsgemäßen Blech-Synchronring, bei dem die Axialanschläge als in Axialrichtung abgewinkelte Indexlappen ausgebildet sind. Diese Ausführung ist jedoch für Synchronisiereinrichtungen mit ringförmigen Synchronfedern ungeeignet, da die Indexlappen keine Anlageflächen zur Begrenzung des axialen Wanderns der Synchronfedern aufweisen.

Aus der DE 10 2005 060 572 A1 ist ein umgeformter Blech-Synchronring bekannt, der Anlageflächen zur Begrenzung des axialen Wanderns der Synchronfeder aufweist. Hierzu sind die Indexlappen zwischen ihren Seitenanschlägen in Gestalt einer Sicke geformt. Die DE 20 2006 008 636 U1 offenbart Ausführungen, bei denen die Indexlappen Materialdurchstellungen aufweisen, die einen Anschlag für eine Synchronfeder bilden. Beide genannten Ausführungen haben jedoch den Nachteil, dass sie nur kleine, nahezu punktförmige Anlageflächen für die Synchronfeder zur Verfügung stellen. Dadurch ist keine exakte Führung der Synchronfeder gegeben, was zu einem schlechten Schaltkomfort oder gar zur Verklemmung der Feder führen kann. Außerdem bleibt fertigungsbedingt ein Spalt zwischen dem Formabschnitt (Sicke, Durchstellung) und der Synchronringaußenfläche an deren kleinem Durchmesser des Reibkegels offen, der bei einer ungünstigen Ausführung ebenfalls zum Verklemmen der Synchronfeder führen kann.

Ein weiteres Problem bei einem umgeformten Blech-Synchronring ist die Zentrierung des Synchronrings in einer Synchronnabe. Im Gegensatz zu den bekannten geschmiedeten Synchronringen aus Messing, die eine Außenfläche in nahezu zylindrischer Form aufweisen und dadurch eine exakte Zentrierung im zylindrisch geformten Innenhohlraum der Synchronnabe sicherstellen, weisen Blech-Synchronringe dagegen fertigungsbedingt eine kegelförmige Außenfläche des Reibkegels auf. Da der Synchronring beim Schaltvorgang von der Schiebemuffe axial in Richtung des Gangrades aus der Synchronnabe heraus verschoben wird, geht die Zentrierung eines Blech-Synchronrings infolge der Verjüngung der Au-βenfläche des Reibkegels zum kleineren Durchmesser hin verloren. Geht die Zentrierung eines Synchronrings verloren, kann dies zu einer Verschlechterung der Funktion, verbunden mit Verschleiß und höheren Schleppmomenten, führen.

Die DE 20 2006 008 636 U1 beschreibt eine Ausführungsform, mit der ein Blech-Synchronring zentrierbar ist. Neben Indexlappen sind zusätzliche Zentrierlappen angebracht, die einen Synchronring in einem Innenhohlraum einer Synchronnabe führen. Solche zusätzlichen Zentrierlappen sind jedoch nachteilig, da zusätzliche Zentrierlappen nur auf Kosten von im Umfangsbereich angeprägten Sperrzähnen ausgebildet werden können. Dadurch reduziert sich die Anzahl der Sperrzähne, was zu einer Erhöhung der spezifischen Belastung an den Dachflächen der übrigen Sperrzähne führt und letztendlich Schädigungen oder sogar zum Bruch der Sperrzähne führen kann.

Synchronringe mit Lappen oder Laschen, welche in Axialrichtung des Synchronrings abgewinkelte Abschnitte aufweisen sind beispielsweise aus der EP 0 821 175 A1, der WO 03/062659 A1 und der DE 198 53 856 A1 bekannt.

Aufgabe der vorliegenden Erfindung ist es deshalb, einen Blechsynchronring für eine Synchronisiereinrichtung vorzuschlagen, der entweder die Zentrierung eines Synchronrings im Innenhohlraum einer Synchronnabe sicherstellt, ohne herbei die Sperrzähne verstärkt zu belasten, oder eine großflächige Anlagefläche aufweist, die eine axiale Bewegung einer Synchronfeder begrenzt, wobei der Synchronring bevorzugt sowohl die Zentrierung sicherstellt als auch eine großflächige Anlagefläche aufweist.

Die genannte Aufgabe wird erfindungsgemäß gelöst durch einen Blech-Synchronring für eine Synchronisiereinrichtung, mit einem kegelförmigen Ringkörper, mit einer Außenverzahnung zur Sperrung der Axialbewegung einer Schiebemuffe und mit wenigstens einem in Axialrichtung abgewinkelten Indexlappen, der die Verdrehung des Synchronrings in einer Synchronnabe begrenzt, wobei der Indexlappen an wenigstens einer Seite eine Lappenerweiterung aufweist.

Mit anderen Worten weist ein Blech-Synchronring für eine Synchronisiereinrichtung einen kegelförmigen Ringkörper, eine Außenverzahnung zur Sperrung der Axialbewegung der Schiebemuffe und wenigstens einen in Axialrichtung abgewinkelten Indexlappen auf, der in zugeordnete Aussparungen einer Synchronnabe eingreift. Die Seitenflächen des Indexlappens fungieren als Verdrehanschlag und wirken mit den Seitenflächen der Aussparung zusammen, so dass ein Verdrehen des Synchronrings in Umfangsrichtung begrenzt ist. Der Blech-Synchronring weist weiter wenigstens einen Indexlappen auf, der an wenigstens einer Seite eine Lappenerweiterung zeigt. Bevorzugt weist der Blech-Synchronring jedoch drei Indexlappen auf.

Besonders vorteilhaft an der am Indexlappen ausgeformten Lappenerweiterung ist, dass sie eine Erhöhung der mechanischen Festigkeit des Indexlappens bewirkt. Ein weiterer Vorteil der Lappenerweiterung ist, dass die Anzahl von Sperrzähnen konstant gehalten werden kann und auf diese Weise eine Verteilung der einwirkenden Kräfte auf eine größere Anzahl von Sperrzähnen möglich ist, die dadurch weniger belastet werden und eine höhere Standfestigkeit besitzen.

Ein derartiger Synchronring wird sowohl in einer Einfach- als auch in einer Mehrfach-Synchronisierung eingesetzt, wobei der Synchronring in einer Mehrfach-Synchronisierung als Außenring oder als äußerer Synchronring bezeichnet wird. In einer vorteilhaften Weiterbildung ist die Lappenerweiterung als Zentrierelement zur Zentrierung des Synchronrings in einer Synchronnabe ausgebildet. Durch die als Zentrierelement ausgebildete Lappenerweiterung wird der kegelförmige Ringkörper und damit auch der Synchronring in einem zylindrisch ausgeformten Innenhohlraum einer Synchronnabe zentriert gelagert. Als Folge ist der Synchronring während des Schaltvorgangs in Axialrichtung verschiebbar, ohne dass die Zentrierung verschlechtert wird. Auf diese Weise wird eine störungsfreie Arbeitsweise des Synchronrings gewährleistet.

In einer bevorzugten Alternative setzt die Lappenerweiterung am Indexlappen in Bezug auf den Ringkörper in Umfangsrichtung oder in Axialrichtung an. Dadurch, dass die Lappenerweiterung am Indexlappen in Bezug auf den Ringkörper in Umfangsrichtung oder in Axialrichtung ansetzt, lässt sich die Lappenerweiterung besonders vorteilhaft den geometrischen Erfordernissen entsprechend ausgestalten. In einer vorteilhaften Ausgestaltung setzt die am Indexlappen in Bezug auf den Ringkörper in Umfangsrichtung ansetzende Lappenerweiterung an beiden Seiten des Indexlappens an. Für die störungsfreie Funktion des Synchronrings ist es jedoch ausreichend, wenn die Lappenerweiterung in Bezug auf den Ringkörper in Umfangsrichtung an nur einer Seite des Indexlappens ansetzt. Die in Axialrichtung am Indexlappen ansetzende Lappenerweiterung kann wenigstens teilweise bis zum Indexlappen geschlitzt ausgeführt sein oder aber schlitzfrei.

Bei dem nach Patentanspruch 1 vorgeschlagenen Synchronring ist die Lappenerweiterung in Bezug auf den Ringkörper teilweise radial und teilweise in Umfangsrichtung ausgerichtet. Vorteilhaft dieser Ausrichtung der Lappenerweiterung ist, dass Lappenerweiterungen herstellbar sind, die einfach zu formen sind und dabei gleichzeitig eine hohe Festigkeit aufweisen.

Ferner liegt bei dem nach Patentanspruch 1 vorgeschlagenen Synchronring der Teil der Lappenerweiterung, der in Umfangsrichtung ausgerichtet ist, am Außenkonus des Ringkörpers an. Dadurch wird erreicht, dass ein derartig ausgestalteter Synchronring problemlos in einer gängigen Synchronisiereinrichtung einsetzbar ist, ohne dass die geometrischen Gegebenheiten der Synchronisiereinrichtung abzuändern wären. Der Teil der Lappenerweiterung, der in Umfangsrichtung ausgerichtet ist, liegt außen am kegelförmigen Ringkörper an und stützt sich am Ringkörper ab. Auf diese Weise trägt die Lappenerweiterung zur Steigerung der Festigkeit des Indexlappens bei.

In einer weiteren Ausgestaltung weist der Indexlappen und die Lappenerweiterung im Wesentlichen dieselbe Materialstärke wie der restliche Synchronring auf. Infolge identischer Materialstärke von Indexlappen, Lappenerweiterung sowie restlichem Synchronring ist es nicht erforderlich, weitere Umformschritte zur Veränderung der Materialstärke bei der Herstellung des Synchronrings durchzuführen, wodurch sich die Herstellungskosten reduzieren.

Zweckmäßigerweise bildet die dem Ringkörper abgewandte Seite des Teils der Lappenerweiterung, der in Umfangsrichtung ausgerichtet ist, mit einem die Au-βenverzahnung tragenden Verzahnungsbund einen stumpfen Winkel (α). Auf diese Weise lässt sich vorteilhaft eine einfache kostengünstige Ausführungsform eines Blech-Synchronrings realisieren. Mit einem stumpfen Winkel α von 90,5° bis 95°, bevorzugt von 91° bis 93°, lässt sich der Synchronring zentrieren. Mit einem stumpfen Winkel α größer als 95° weist die Lappenerweiterung nur eine Auflagefläche für eine Synchronfeder auf.

In einer besonders vorteilhaften Weiterbildung ist der Teil der Lappenerweiterung, der in Umfangsrichtung ausgerichtet ist, keilförmig abgeprägt. Durch die keilförmige Abprägung des Teils der Lappenerweiterung, der in Umfangsrichtung ausgerichtet ist, lassen sich zwei technische Gegebenheiten auf einfache Weise umsetzen. Zum einen lässt sich durch definiertes Abprägen, also durch Veränderung der Materialstärke der Lappenerweiterung, der Außendurchmesser der Lappenerweiterung genau auf den Durchmesser des Innenhohlraums der eingesetzten Synchronnabe anpassen und andererseits die Außenfläche der Lappenerweiterung so gestalten, dass diese den Synchronring in der Synchronnabe zentriert.

Vorteilhafterweise bildet die dem Ringkörper abgewandte Seite des Teils der Lappenerweiterung, der in Umfangsrichtung ausgerichtet ist, mit einer die Au-βenverzahnung tragenden Verzahnungsbund einen spitzen (β) oder einen rechten Winkel. Liegt ein spitzer Winkel vor, findet die Zentrierung im Wesentlichen an der oberen Kante des in Umfangsrichtung weisenden Teils der Lappenerweiterung statt. Liegt ein rechter Winkel vor, ist die Außenfläche der Lappenerweiterung zumindest teilweise zylindrisch ausgestaltet.

In einer vorteilhaften Weiterbildung ist der Teil der Lappenerweiterung, der in Umfangsrichtung ausgerichtet ist, mit dem Außenkonus des Ringkörpers stoffschlüssig, insbesondere durch Löten, Schweißen oder Kleben oder formschlüssig verbunden. Durch stoffschlüssiges oder formschlüssiges Verbinden der Lappenerweiterung mit dem Ringkörper wird die Festigkeit des Synchronrings im Bedarfsfall weiter erhöht.

In einer bevorzugten Alternative weist die Lappenerweiterung eine Anlagefläche zur Begrenzung des axialen Wanderns eines Federelements auf. Die Lappenerweiterung ist besonders vorteilhaft, da sie eine ausreichend große Anlagefläche für eine eventuell in einer Synchronisierung eingesetzte Synchronfeder bietet, wodurch eine exakte Führung der Feder gegeben ist, was zu einem guten Schaltkomfort führt. Verklemmungen der Synchronfeder sind ausgeschlossen und eine sichere Funktion ist gegeben.

In einer besonders vorteilhaften Ausführungsform fungiert die Lappenerweiterung gleichzeitig als Zentrierelement zur Zentrierung des Synchronrings in einer Synchronnabe und als Anlagefläche zur Begrenzung des axialen Wanderns eines Federelements.

In einer weiteren Ausführungsform ist die Lappenerweiterung stufig ausgeformt ist. Eine stufige Ausformung der Lappenerweiterung lässt sich besonders einfach durch Umformen herstellen.

In einer weiteren Ausgestaltung ist die an der axialen Seite des Indexlappens ansetzende Lappenerweiterung in Bezug auf den Ringkörper in radiale Richtung gebogen.

In einer anderen Ausführungsform ist die an der axialen Seite des Indexlappens ansetzende Lappenerweiterung in Umfangsrichtung gebogen. Auf diese Weise ergibt sich ein besonders stabiler Indexlappen.

Zweckmäßigerweise sind der Synchronring, der Indexlappen und die Lappenerweiterung einstückig gefertigt. Ausgangsmaterial ist ein ebenes Blech, aus dem durch Umformen der Synchronring mit all seinen Komponenten gefertigt ist. Der einstückige Synchronring erfordert aufgrund seiner Einstückigkeit keine aufwendigen Einpass- oder Befestigungsschritte für die angeformten Komponenten.

In einer vorteilhaften Weiterbildung ist der in Umfangsrichtung ausgerichtete Teil der Lappenerweiterung des Indexlappens von dem in Umfangsrichtung ausgerichteten Teil der Lappenerweiterung des benachbarten Indexlappens beabstandet. Dadurch wird die Masse des Synchronrings verringert und der Aufwand zum Anpassen des in Umfangsrichtung weisenden Teils der Lappenerweiterung an den Außenkonus und die Krümmung des Ringkörpers reduziert.

In einer alternativen Ausführungsform ist der in Umfangsrichtung ausgerichtete Teil der Lappenerweiterung des Indexlappens so lang, dass er den entsprechenden Teil der Lappenerweiterung des benachbarten Indexlappens berührt. Hierdurch wird die Führung des Synchronrings in der Synchronnabe entlang der gesamten Außenfläche der Lappenerweiterung erreicht.

Mehrere Ausführungsbeispiele werden anhand der Zeichnung und anhand der nachstehenden Beschreibung näher erläutert. Es zeigen:
- Fig. 1: die üblichen Komponenten einer Synchronisiereinheit
- Fig. 2: einen Blech-Synchronring mit einer Zentrierung (Stand der Technik)
- Fig. 3: eine erste Ausführungsform eines erfindungsgemäßen Blech-Synchronrings
- Fig. 4: eine vergrößerte Ausschnittsdarstellung von Fig. 3
- Fig. 5: eine Ausschnittsdarstellung einer zweiten Ausführungsform eines erfindungsgemäßen Blech-Synchronrings
- Fig. 6: eine Ausschnittsdarstellung einer dritten Ausführungsform eines erfindungsgemäßen Blech-Synchronrings und
- Fig. 7: einen Querschnitt durch einen erfindungsgemäßen Blech-Synchronring, an einer Stelle, an der sich eine Lappenerweiterung in Umfangsrichtung befindet.

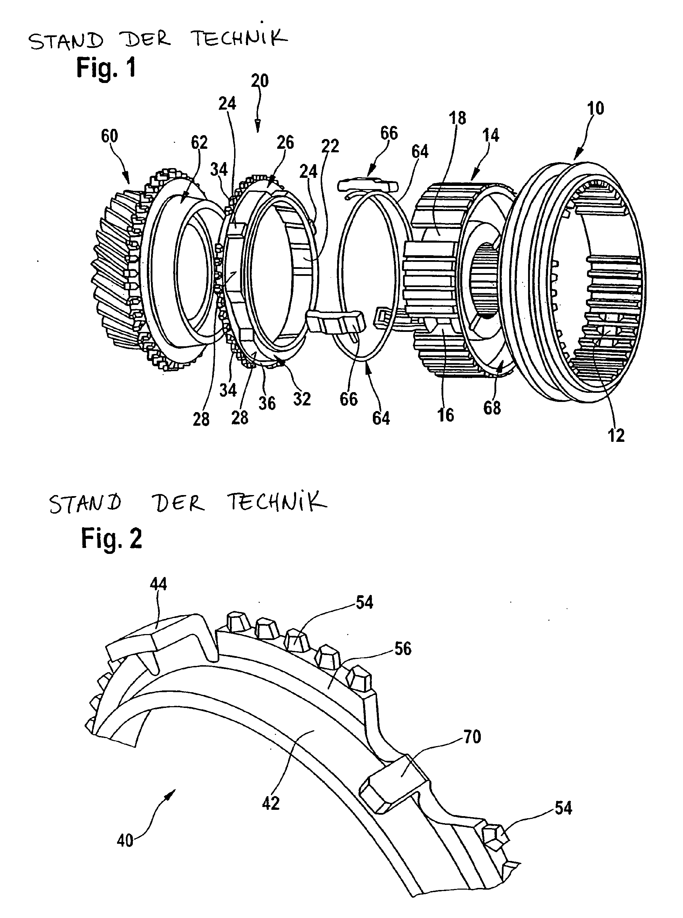

Eine bekannte Synchronisiereinheit mit den für die Synchronisierung wichtigsten Komponenten ist beispielhaft in Figur 1 dargestellt. Diese Synchronisiereinheit weist eine Schiebemuffe 10, eine Synchronnabe 14 und ein Gangrad 60 mit einem damit verbundenem Reibkegel 62 auf. Der Reibkegel 62 wirkt mit einem kegelförmigen Ringkörper 22 eines aus Messing gefertigten Synchronrings 20 zusammen und baut ein Reibmoment zwischen dem Synchronring 20 und dem Reibkegel 62 auf. Im dargestellten Beispielsfall weist die Synchronisiereinheit zwischen Synchronring 20 und Synchronnabe 14 ringförmig ausgeführte Synchronfedern 64 auf, an denen drei Druckstücke 66 angebracht sind. Die Druckstücke 66 ragen einerseits in eine Ausnehmung 26 des Synchronrings 20 und andererseits in eine erste umfangsseitige Ausnehmung 16 der Synchronnabe 14. Die Synchronfedern 64 werden gegen die Schiebemuffe 10 gedrückt. Jedes Druckstück 66 weist einen erhabenen Rastvorsprung auf, der in einer Rastkontur 12 der Schiebemuffe 10 angeordnet ist.

Durch die axiale Bewegung der Schiebemuffe 10 werden während des Schaltvorgangs die Druckstücke 66 und die Synchronfedern 64 über die Rastkontur 12 der Schiebemuffe 10 axial mitbewegt. Die axiale Beweglichkeit der Synchronfeder 64 muss dabei am Synchronring 20 über eine entsprechend ausgebildete Anlagefläche 32 begrenzt sein. Infolge der axialen Bewegung der Schiebemuffe 10 drücken die Druckstücke 66 den Synchronring 20 axial in Richtung Reibkegel 62 des Gangrades 60, wodurch sich eine Vorsynchronisierungskraft aufbaut und der Synchronring 20 aufgrund des entstehenden Reibmoments in eine definierte Sperrposition in Umfangsrichtung verdreht wird.

Die Sperrposition geben axiale Anschläge 24 vor, die in zugeordnete Aussparungen 18 der Synchronnabe 14 ragen. Die Seitenflächen des axialen Anschlags 24 wirken mit den Seitenflächen der zugeordneten Aussparungen 18 zusammen und bilden auf diese Weise eine formschlüssige Verbindung mit der Synchronnabe 14. Der Ringkörper 22 eines geschmiedeten Synchronrings 20 weist eine Außenfläche 28 auf, die mit einem Verzahnungsbund 36 einen nahezu rechten Winkel einschließt, oder in anderen Worten, deren Form nahezu zylindrisch ist, wodurch eine exakte Zentrierung in einem zylindrisch geformten Innenhohlraum 68 der Synchronnabe 14 erfolgt.

Fig. 2 zeigt eine Ausschnittsdarstellung eines aus dem Stand der Technik bekannten Blech-Synchronrings 40. Der aus ebenem Blechmaterial im Stanz- und Ziehverfahren hergestellte Synchronring 40 weist drei in Axialrichtung abgewinkelte Indexlappen 44 auf, von denen nur einer abgebildet ist, die als Axialanschläge fungieren und deren Seitenflächen mit den Seitenflächen dreier zugeordneter Aussparungen 18 einer Synchronnabe 14 zusammenwirken und ein Verdrehen des Synchronrings 40 gegenüber der Synchronnabe 14 in Umfangsrichtung begrenzen. Der Ringkörper 42 ist sowohl an seiner Innen- als auch an seiner Außenseite kegelförmig. Durch den abnehmenden Durchmesser des kegelförmigen Ringkörpers 42 ist eine Zentrierung des Synchronrings 40 in dem zylindrischen Innenhohlraum 68 einer Synchronnabe 14 zunächst nicht möglich.

Um die Zentrierung dieses Synchronrings 40 sicherzustellen, sind neben den drei Indexlappen 44 drei zusätzliche Zentrierlappen 70 ausgeformt, an deren dem Ringkörper 42 abgewandten Seiten der Synchronring 40 im Innenhohlraum 68 der Synchronnabe 14 geführt und auf diese Weise zentriert wird. Ungünstig an zusätzlichen Zentrierlappen 70 ist jedoch, dass zusätzliche Zentrierlappen 70 nur auf Kosten der im Umfangsbereich des Synchronrings 40 befindlichen Sperrzähne 54 ausgebildet werden können. In dem Bereich eines Verzahnungsbunds 56 des Synchronrings 40, in dem sich ein Zentrierlappen 70 befindet, können keine Spenzähne 54 ausgebildet sein. Diese geringere Anzahl der Spenzähne 54 führt zu einer Erhöhung der spezifischen Belastung an den Dachflächen der übrigen Sperrzähne 54, was zu Schädigungen oder sogar zum Bruch der Sperrzähne 54 führen kann.

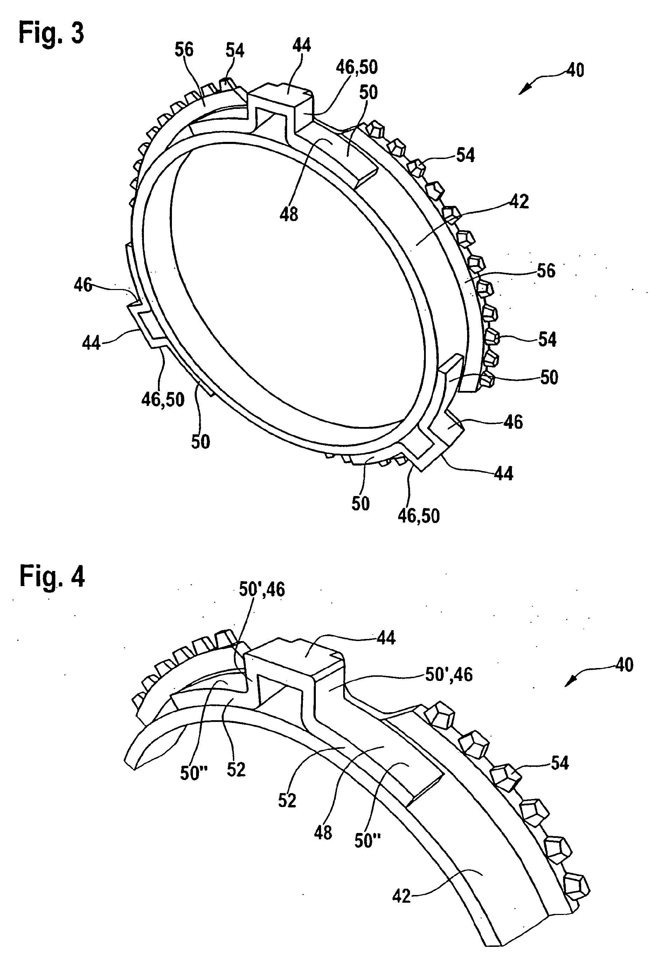

Eine erste Ausführungsform des Blech-Synchronrings 40 ist in Fig. 3 dargestellt. Der Synchronring 40 weist einen kegelförmigen Ringkörper 42 auf, an dessen unterem Ende ein Verzahnungsbund 56 angeordnet ist, der eine Außenverzahnung 54 trägt, die durch Indexlappen 44 unterbrochen ist. Der Blech-Synchronring 40 weist die bevorzugte Anzahl von drei in Axialrichtung abgewinkelten Indexlappen 44 auf, die als Verdrehanschläge 46 in zugeordnete Aussparungen 18 einer Synchronnabe 14 eingreifen und ein Verdrehen in Umfangsrichtung begrenzen. Im Bedarfsfall könnten jedoch auch zwei, vier oder mehr Indexlappen 44 vorgesehen sein. Die Indexlappen 44 weisen an beiden in Umfangsrichtung des Ringkörpers 42 orientierten Seiten eine Lappenerweiterung 50 auf. Alternativ könnte auch nur an einer Seite der Indexlappen 44 eine Lappenerweiterung 50 vorgesehen sein. Im dargestellten Ausführungsbeispiel sind die aufeinander zuweisenden Lappenerweiterungen 50 zweier benachbarter Indexlappen 44 voneinander beabstandet. Alternativ dazu können die Lappenerweiterungen 50 auch soweit am Ringkörper 42 geführt werden, dass sich die Lappenerweiterungen 50 benachbarter Indexlappen 44 berühren.

Eine vergrößerte Ausschnittsdarstellung des in Fig. 3 gezeigten Blech-Synchronrings 40 mit stufig ausgeformter Lappenerweiterung 50 zeigt Fig. 4. An beiden in Umfangsrichtung des Ringkörpers 42 weisenden Seiten der in Axialrichtung umgebogenen Indexlappen 44 setzt die Lappenerweiterung 50 an, wobei die Lappenerweiterung 50' zunächst radial zum Ringkörper 42 verläuft, um in einen in Umfangsrichtung weisenden Teil der Lappenerweiterung 50" überzugehen. Die radial zum Ringkörper 42 orientierte Lappenerweiterung 50' stellt einen Verdrehanschlag 46 dar, der mit dem zugeordneten Verdrehanschlag der Aussparung 18 einer Synchronnabe 14 zusammenwirkt.

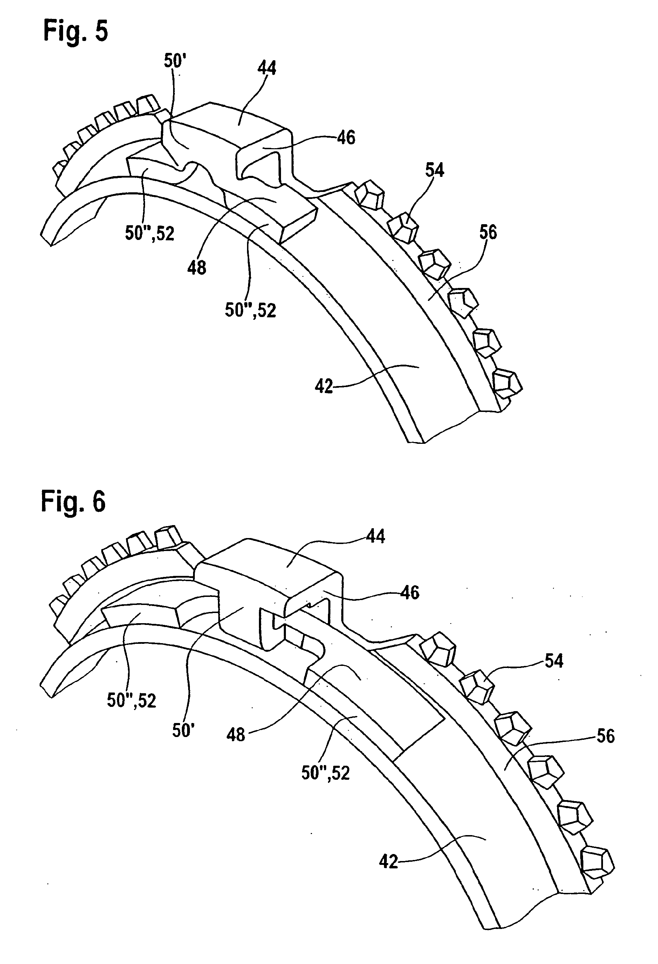

Der in Umfangsrichtung des Ringkörpers 42 weisende Teil der Lappenerweiterung 50" erfüllt zwei Aufgaben. Zum einen fungiert die Lappenerweiterung 50" als Zentrierelement, das den Blech-Synchronring 40 bei dessen Bewegung in Axialrichtung zentriert im zylindrischen Innenhohlraum 68 der Synchronnabe 14 hält. Zum anderen gewährleistet die der Außenverzahnung 54 abgewandte Seite der Lappenerweiterung 50" als Anlagefläche 52, dass das axiale Wandern eines ringförmigen Federelements 64 begrenzt wird. Die Anlagefläche 52 kann, wie im dargestellten Fall, bündig mit der der Außenverzahnung 54 abgewandten Seite des Ringkörpers 42 sein oder gegenüber dieser Kante zurückgesetzt oder hervorgehoben sein. Dies gilt ebenfalls für die in Fig. 5 und 6 dargestellten Ausführungsformen.

Durch die Beschränkung auf drei Indexlappen 44, ohne das Erfordernis zusätzlicher Zentrierlappen 70, ist die Anzahl der Sperrzähne 54 im Vergleich zu dem bekannten, in Fig. 2 dargestellten Synchronring 40, deutlich erhöht, wodurch die Belastung eines jeden einzelnen Sperrzahns 54 reduziert und die Gefahr einer Schädigung der Sperrzähne 54 ausgeschaltet ist.

In Fig. 5 ist eine weitere Ausführungsform eines Synchronrings 40 dargestellt. Bei dieser Ausgestaltung setzt die Lappenerweiterung 50 an der axialen Seite des Indexlappens 44 an und weist zwei Flügel auf. Die Lappenerweiterung 50' verläuft zunächst radial zum Ringkörper 42, um in einen in Umfangsrichtung verdrehten Teil der Lappenerweiterung 50" überzugehen. Bei dieser Ausführungsform stellen die Seitenflächen des Indexlappens 44 einen Verdrehanschlag 46 dar, der mit dem Verdrehanschlag einer zugeordneten Aussparung 18 einer Synchronnabe 14 zusammenwirkt. Die Außenverzahnung 54 des Synchronrings 40 ist durch Indexlappen 44 unterbrochen.

Fig. 6 zeigt eine weitere Ausführungsform des Synchronrings 40, dessen Außenverzahnung 54 durch Indexlappen 44 unterbrochen ist. Die Lappenerweiterung 50 setzt ebenfalls an der axialen Seite des Indexlappens 44 an und ist zunächst in radiale und dann in axiale Richtung gebogen, wobei ein Teil der Lappenerweiterung 50" in Umfangsrichtung des Ringkörpers 42 weist. Bei dieser Ausführungsform stellen die Seitenflächen des Indexlappens 44 ebenfalls einen Verdrehanschlag 46 dar, der mit dem Verdrehanschlag einer zugeordneten Aussparung 18 einer Synchronnabe 14 zusammenwirkt.

Für die in den Fig. 3, 4 und 5 dargestellten Ausführungsformen gilt, dass der in Umfangsrichtung des Ringkörpers 42 weisende Teil der Lappenerweiterung 50" am Außenkonus des Ringkörpers 42 anliegt, wobei die Lappenerweiterung 50" rein umformtechnisch an der kegelförmigen Außenfläche des Ringkörpers 42 fixiert ist. Dabei kann ein kleiner Spalt zwischen kegelförmigen Außenfläche des Ringkörpers 42 und Lappenerweiterung 50" verbleiben. Bei erhöhten mechanischen Anforderungen ist die Lappenerweiterung 50" formschlüssig oder stoffschlüssig, beispielsweise durch Löten, Schweißen oder Kleben, mit der Außenfläche des Ringkörpers 42 verbunden.

Als Ausgangsmaterial wurde ein ebenes Blechstück verwendet, aus dem ein einteiliger Synchronring 40 hergestellt worden ist. Alle Synchronringbestandteile, also Ringkörper 42, Indexlappen 44, Lappenerweiterung 50, Verzahnungsbund 56 und Außenverzahnung 54 sind durch Umformtechniken aus dem Ausgangsblech hergestellt worden.

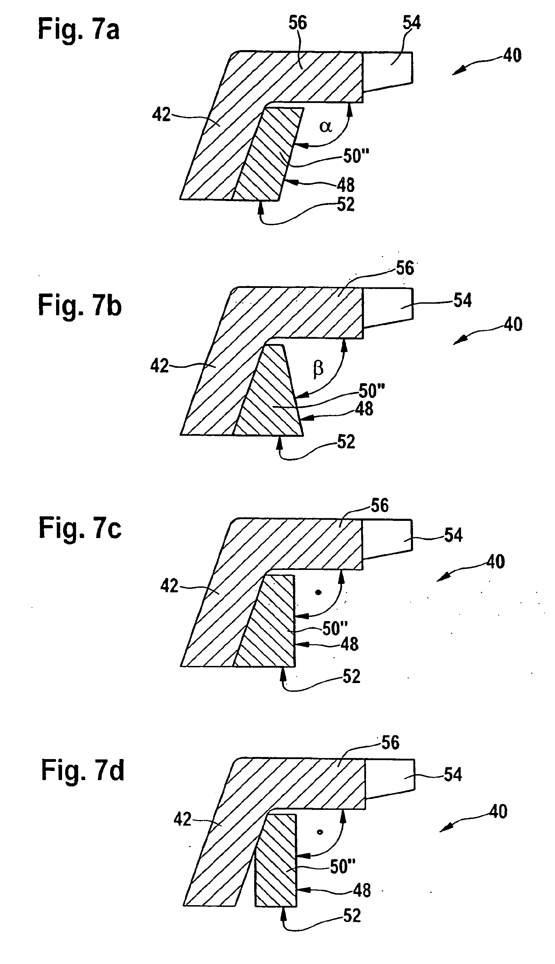

In Fig. 7 sind schematisch vier Varianten a), b), c) und d) für die Ausgestaltung der Lappenerweiterung 50" in Umfangsrichtung im Querschnitt dargestellt. In Fig. 7a weist die Lappenerweiterung 50" in Umfangsrichtung nahezu dieselbe Materialstärke auf wie der restliche Synchronring 40, also beispielsweise wie Ringkörper 42 oder Verzahnungsbund 56. Die Lappenerweiterung 50" liegt am Außenkonus des Ringkörpers 42 an. Zwischen der dem Ringkörper 42 abgewandten Seite der Lappenerweiterung 50" und dem Verzahnungsbund 56 wird ein stumpfer Winkel α eingeschlossen.

Die Anlagefläche 52 zur Begrenzung des axialen Wanderns eines ringförmigen Federelements 64 schließt bündig mit dem Ende des Ringkörpers 42 ab. Die Anlagefläche 52 kann jedoch auch gegenüber der den Ringkörper 42 abschließenden Fläche zurückgesetzt oder hervorgehoben sein. Dies gilt ebenfalls für die Varianten b), c) und d).

Fig. 7b zeigt eine keilförmig abgeprägte Lappenerweiterung 50", die am Außenkonus des Ringkörpers 42 anliegt und deren dem Ringkörper 42 gegenüberliegende Seite mit dem Verzahnungsbund 56 einen spitzen Winkel β einschließt. Durch die keilförmige Ausgestaltung der Lappenerweiterung 50" wird die Zentrierung des Synchronrings 40 in einem zylindrischen Innenhohlraum 68 einer Synchronnabe 14 sichergestellt.

Fig. 7c zeigt ebenfalls eine keilförmig abgeprägte Lappenerweiterung 50", deren Abprägung jedoch so erfolgt ist, dass die dem Ringkörper 42 abgewandte Seite der Lappenerweiterung 50" eine zylinderförmige Fläche bildet und die Zentrierung des Synchronrings 40 in dem Innenhohlraum 68 einer Synchronnabe 14 sicherstellt, wobei der Synchronring 40 entlang der zylinderförmigen Fläche geführt wird. Die dem Ringkörper 42 abgewandte Seite der Lappenerweiterung 50" schließt mit dem Verzahnungsbund 56 einen rechten Winkel ein.

In Fig. 7d weist die Lappenerweiterung 50" in Umfangsrichtung nahezu dieselbe Materialstärke auf wie der restliche Synchronring 40, also beispielsweise wie Ringkörper 42 oder Verzahnungsbund 56. Die Lappenerweiterung 50" liegt teilweise am Außenkonus des Ringkörpers 42 an. Zwischen der dem Ringkörper 42 abgewandten Seite der Lappenerweiterung 50" und dem Verzahnungsbund 56 wird ein rechter Winkel eingeschlossen. Die Außenfläche 48 der Lappenerweiterung 50" bildet eine zylinderförmige Fläche, welche die Zentrierung des Synchronrings 40 im Innenhohlraum 68 einer Synchronnabe 14 sicherstellt, wobei der Synchronring 40 entlang der zylinderförmigen Fläche geführt wird.

Die Herstellung des Blech-Synchronrings 40 erfolgt zunächst in bekannter Weise mittels Ausstanzens einer Vorform, die in einem zusammenhängenden Stück die benötigte Gestalt einschließlich Indexlappen 44 mit Lappenerweiterung 50 aufweist. In mehreren Umformschritten wird die ausgestanzte Vorform in die in Fig. 3 bis 7 gezeigte Endform gebracht. Hierzu wird der Ringkörper 42 in Form gezogen und die Verzahnung 54 angeprägt. In einem Zwischenschritt wird die Lappenerweiterung 50 dem Kegelwinkel des Ringkörpers 42 entsprechend keilförmig abgeprägt, um nach dem Umformen eine zylindrische Außenfläche zu bilden. Zusätzlich wird bei diesem Fertigungsschritt die Dicke der Lappenerweiterung 50 auf das erforderliche Maß abgeprägt, um den exakten Außendurchmesser für die Zentrierung einzustellen. Danach erfolgt die Umformung der Lappenerweiterungen 50, wobei als Umformhilfe in die Vorform bereits Biegenuten in die umzuformenden Lappenerweiterungen eingeprägt sein können, die eine exakte Kantenbildung sicherstellen. Während die erste Ausführungsform des Synchronrings durch eine einfache Umformoperation herstellbar ist, bieten die beiden anderen Ausführungsformen eine präzise Ausführung der seitlichen Anlageflächen.

### Bezugszeichenliste

- 10: Schiebemuffe
- 12: Rastkontur
- 14: Synchronnabe
- 16: erste Ausnehmung
- 18: zugeordnete Aussparung
- 20: Synchronring
- 22: Ringkörper
- 24: axialer Anschlag
- 26: Verdrehanschlag
- 28: Außenfläche des Ringkörpers
- 30: Ausnehmung
- 32: Anlagefläche
- 34: Außenverzahnung
- 36: Verzahnungsbund
- 40: Blech-Synchronring
- 42: Ringkörper
- 44: Indexlappen
- 46: Verdrehanschlag
- 48: Außenfläche der Lappenerweiterung
- 50: Lappenerweiterung
- 50': Lappenerweiterung radial zum Ringkörper
- 50": Lappenerweiterung in Umfangsrichtung
- 52: Anlagefläche
- 54: Außenverzahnung
- 56: Verzahnungsbund
- 60: Gangrad
- 62: Reibkegel
- 64: Synchronfeder
- 66: Druckstück
- 68: Innenhohlraum
- 70: Zentrierlappen

## Patentansprüche

1. Blech-Synchronring (40) für eine Synchronisiereinrichtung, mit einem kegelförmigen Ringkörper (42), mit einer Außenverzahnung (54) zur Sperrung der Axialbewegung einer Schiebemuffe (10) und mit wenigstens einem in Axialrichtung abgewinkelten Indexlappen (44), der die Verdrehung des Synchronrings (40) in einer Synchronnabe (14) begrenzt, wobei der Indexlappen (44) an wenigstens einer Seite eine Lappenerweiterung (50) aufweist, dardurch gekennzeichnet, dass
die Lappenerweiterung (50) in Bezug auf den Ringkörper (42) teilweise radial (50') und teilweise in Umfangsrichtung (50") ausgerichtet ist, wobei der Teil der Lappenerweiterung (50"), der in Umfangsrichtung ausgerichtet ist, am Außenkonus des Ringkörpers (42) anliegt.

2. Synchronring nach Anspruch 1,
**dadurch gekennzeichnet,**
**dass** die Lappenerweiterung (50) als Zentrierelement zur Zentrierung des Synchronrings (40) in einer Synchronnabe (14) ausgebildet ist.

3. Synchronring nach Anspruch 1 oder 2,
**dadurch gekennzeichnet,**
**dass** die Lappenerweiterung (50) am Indexlappen (44) in Bezug auf den Ringkörper (42) in Umfangsrichtung oder in Axialrichtung ansetzt.

4. Synchronring nach einem der vorhergehenden Ansprüche,
**dadurch gekennzeichnet**,
der Indexlappen (44) und die Lappenerweiterung (50) im wesentlichen dieselbe Materialstärke aufweisen wie der restliche Synchronring (40).

5. Synchronring nach einem der vorhergehenden Ansprüche,
**dadurch gekennzeichnet,**
**dass** die dem Ringkörper (42) abgewandte Seite des Teils der Lappenerweiterung (50"), der in Umfangsrichtung ausgerichtet ist, mit einem die Au-βenverzahnung (54) tragenden Verzahnungsbund (56) einen stumpfen Winkel (α) bildet.

6. Synchronring nach einem der Ansprüche 1 bis 3,
**dadurch gekennzeichnet,**
**dass** der Teil der Lappenerweiterung (50"), der in Umfangsrichtung ausgerichtet ist, keilförmig abgeprägt ist.

7. Synchronring nach einem der Ansprüche 1 bis 4 oder 6,
**dadurch gekennzeichnet,**
**dass** die dem Ringkörper (42) abgewandte Seite des Teils der Lappenerweiterung (50"), der in Umfangsrichtung ausgerichtet ist, mit einer die Au-βenverzahnung (44) tragenden Verzahnungsbund (56) einen spitzen (β) oder einen rechten Winkel bildet.

8. Synchronring nach einem der Ansprüche 1 bis 7,
**dadurch gekennzeichnet,**
**dass** der Teil der Lappenerweiterung (50"), der in Umfangsrichtung ausgerichtet ist, mit dem Außenkonus des Ringkörpers (42) stoffschlüssig, insbesondere durch Löten, Schweißen oder Kleben oder formschlüssig verbunden ist.

9. Synchronring nach einem der vorhergehenden Ansprüche,
**dadurch gekennzeichnet,**
**dass** die Lappenerweiterung (50) eine Anlagefläche (52) zur Begrenzung des axialen Wanderns eines Federelements (64) aufweist.

10. Synchronring nach einem der vorhergehenden Ansprüche,
**dadurch gekennzeichnet,**
**dass** die Lappenerweiterung (50) stufig ausgeformt ist.

11. Synchronring nach einem der Ansprüche 1 bis 9,
**dadurch gekennzeichnet,**
**dass** die an der axialen Seite des Indexlappens (44) ansetzende Lappenerweiterung (50) in Bezug auf den Ringkörper (42) in radiale Richtung gebogen ist.

12. Synchronring nach einem der Ansprüche 1 bis 9,
**dadurch gekennzeichnet,**
**dass** die an der axialen Seite des Indexlappens (44) ansetzende Lappenerweiterung (50) in Umfangsrichtung gebogen ist.

13. Synchronring nach einem der vorhergehenden Ansprüche,
**dadurch gekennzeichnet,**
**dass** der Synchronring (40), der Indexlappen (44) und die Lappenerweiterung (50) einstückig gefertigt sind.

14. Synchronring nach einem der vorhergehenden Ansprüche,
**dadurch gekennzeichnet,**
**dass** der in Umfangsrichtung ausgerichtete Teil der Lappenerweiterung (50") des Indexlappens (44) von dem in Umfangsrichtung ausgerichteten Teil der Lappenerweiterung (50") des benachbarten Indexlappens (44) beabstandet ist.

15. Synchronring nach einem der Ansprüche 1 bis 13,
**dadurch gekennzeichnet,**
**dass** der in Umfangsrichtung ausgerichtete Teil der Lappenerweiterung (50") des Indexlappens (44) den entsprechenden Teil der Lappenerweiterung (50") des benachbarten Indexlappens (44) berührt.

## Claims

1. Sheet-metal synchronizer ring (40) for a synchronizing device, having a conical ring body (42), having an outer toothing (54) for blocking the axial movement of a sliding sleeve (10), and having at least one indexing tab (44) which is bent in the axial direction and limits the rotation of the synchronizer ring (40) in a synchronizer hub (14), wherein the indexing tab (44) has a tab widened portion (50) on at least one side,
**characterized**
**in that** the tab widened portion (50) is oriented partially radially (50') and partially in the circumferential direction (50") with respect to the ring body (42), wherein that part of the tab widened portion (50") which is oriented in the circumferential direction bears against the outer cone of the ring body (42).

2. Synchronizer ring according to Claim 1,
**characterized**
**in that** the tab widened portion (50) is embodied as a centering element for centering the synchronizer ring (40) in a synchronizer hub (14).

3. Synchronizer ring according to Claim 1 or 2,
**characterized**
**in that** the tab widened portion (50) adjoins the indexing tab (44) in the circumferential direction or in the axial direction with respect to the ring body (42).

4. Synchronizer ring according to one of the preceding claims,
**characterized**
**in that** the indexing tab (44) and the tab widened portion (50) have essentially the same thickness of material as the rest of the synchronizer ring (40).

5. Synchronizer ring according to one of the preceding claims,
**characterized**
**in that** the side, facing away from the ring body (42), of the part of the tab widened portion (50") which is oriented in the circumferential direction forms an obtuse angle (α) with a toothing collar (56) which bears the outer toothing (54).

6. Synchronizer ring according to one of Claims 1 to 3,
**characterized**
**in that** that part of the tab widened portion (50'') which is oriented in the circumferential direction is stamped in a wedge shape.

7. Synchronizer ring according to one of Claims 1 to 4 or 6,
**characterized**
**in that** the side, facing away from the ring body (42), of the part of the tab widened portion (50") which is oriented in the circumferential direction forms an acute angle (β) or a right angle with a toothing collar (56) which bears the outer toothing (54).

8. Synchronizer ring according to one of Claims 1 to 7,
**characterized**
**in that** that part of the tab widened portion (50") which is oriented in the circumferential direction is connected to the outer cone of the ring body (42) in a materially joined fashion, in particular by soldering, welding or bonding, or in a positively locking fashion.

9. Synchronizer ring according to one of the preceding claims,
**characterized**
**in that** the tab widened portion (50) has a bearing face (52) for limiting the axial migration of a spring element (64).

10. Synchronizer ring according to one of the preceding claims,
**characterized**
**in that** the tab widened portion (50) is of stepped shape.

11. Synchronizer ring according to one of Claims 1 to 9,
**characterized**
**in that** the tab widened portion (50) which adjoins the axial side of the indexing tab (44) is bent in the radial direction with respect to the ring body (42) .

12. Synchronizer ring according to one of Claims 1 to 9,
**characterized**
**in that** the tab widened portion (50) which adjoins the axial side of the indexing tab (44) is bent in the circumferential direction.

13. Synchronizer ring according to one of the preceding claims,
**characterized**
**in that** the synchronizer ring (40), the indexing tab (44) and the tab widened portion (50) are fabricated in one piece.

14. Synchronizer ring according to one of the preceding claims,
**characterized**
**in that** that part of the tab widened portion (50") of the indexing tab (44) which is oriented in the circumferential direction is spaced apart from that part of the tab widened portion (50") of the adjacent indexing tab (44) which is oriented in the circumferential direction.

15. Synchronizer ring according to one of Claims 1 to 13,
**characterized**
**in that** that part of the tab widened portion (50") of the indexing tab (44) which is oriented in the circumferential direction is in contact with the corresponding part of the tab widened portion (50") of the adjacent indexing tab (44).

## Revendications

1. Bague de synchronisation en tôle (40) pour un dispositif de synchronisation avec un corps de bague conique (42), avec une denture extérieure (54) pour bloquer le mouvement axial d'un manchon coulissant (10) et avec au moins une oreille d'indexage (44) coudée en direction axiale, qui limite la rotation de la bague de synchronisation (40) dans un moyeu de synchronisation (14), dans laquelle l'oreille d'indexage (44) présente une extension d'oreille (50) sur au moins un côté, **caractérisée en ce que** l'extension d'oreille (50) est orientée en partie en direction radiale (50') et en partie en direction périphérique (50") par rapport au corps de bague (42), dans laquelle la partie de l'extension d'oreille (50"), qui est orientée en direction périphérique, est appliquée sur le cône extérieur du corps de bague (42).

2. Bague de synchronisation selon la revendication 1, **caractérisée en ce que** l'extension d'oreille (50) est réalisée sous la forme d'un élément de centrage pour le centrage de la bague de synchronisation (40) dans un moyeu de synchronisation (14).

3. Bague de synchronisation selon la revendication 1 ou 2, **caractérisée en ce que** l'extension d'oreille (50) est reliée à l'oreille d'indexage (44) en direction périphérique ou en direction axiale par rapport au corps de bague (42).

4. Bague de synchronisation selon l'une quelconque des revendications précédentes, **caractérisée en ce que** l'oreille d'indexage (44) et l'extension d'oreille (50) présentent essentiellement la même épaisseur de matière que le reste de la bague de synchronisation (40).

5. Bague de synchronisation selon l'une quelconque des revendications précédentes, **caractérisée en ce que** le côté de la partie de l'extension d'oreille (50") situé à l'opposé du corps de bague (42), qui est orienté dans la direction périphérique, forme un angle obtus (α) avec un rebord denté (56) portant la denture extérieure (54).

6. Bague de synchronisation selon l'une quelconque des revendications 1 à 3, **caractérisée en ce que** la partie de l'extension d'oreille (50"), qui est orientée en direction périphérique, est estampée en forme de coin.

7. Bague de synchronisation selon l'une quelconque des revendications 1 à 4 ou 6, **caractérisée en ce que** le côté de la partie de l'extension d'oreille (50") situé à l'opposé du corps de bague (42), qui est orienté en direction périphérique, forme un angle aigu (β) ou un angle droit avec un rebord denté (56) portant la denture extérieure (54).

8. Bague de synchronisation selon l'une quelconque des revendications 1 à 7, **caractérisée en ce que** la partie de l'extension d'oreille (50"), qui est orientée en direction périphérique, est assemblée en complémentarité de matière, en particulier par brasage, soudage ou collage, ou en complémentarité de forme, au cône extérieur du corps de bague (42).

9. Bague de synchronisation selon l'une quelconque des revendications précédentes, **caractérisée en ce que** l'extension d'oreille (50) présente une face d'appui (52) pour limiter le déplacement axial d'un élément de ressort (64).

10. Bague de synchronisation selon l'une quelconque des revendications précédentes, **caractérisée en ce que** l'extension d'oreille (50) est réalisée sous forme étagée.

11. Bague de synchronisation selon l'une quelconque des revendications 1 à 9, **caractérisée en ce que** l'extension d'oreille (50) reliée au côté axial de l'oreille d'indexage (44) est cintrée en direction radiale par rapport au corps de bague (42).

12. Bague de synchronisation selon l'une quelconque des revendications 1 à 9, **caractérisée en ce que** l'extension d'oreille (50) reliée au côté axial de l'oreille d'indexage (44) est cintrée en direction périphérique.

13. Bague de synchronisation selon l'une quelconque des revendications précédentes, **caractérisée en ce que** la bague de synchronisation (40), l'oreille d'indexage (44) et l'extension d'oreille (50) sont fabriquées d'une seule pièce.

14. Bague de synchronisation selon l'une quelconque des revendications précédentes, **caractérisée en ce que** la partie de l'extension d'oreille (50") de l'oreille d'indexage (44), orientée en direction périphérique, est espacée de la partie de l'extension d'oreille (50") orientée en direction périphérique de l'oreille d'indexage voisine (44).

15. Bague de synchronisation selon l'une quelconque des revendications 1 à 13, **caractérisée en ce que** la partie de l'extension d'oreille (50") de l'oreille d'indexage (44), orientée en direction périphérique, touche la partie correspondante de l'extension d'oreille (50") de l'oreille d'indexage voisine (44).
